# EUROPEAN PATENT SPECIFICATION

(11) **EP 2 021 142 B1**
(45) Date of publication and mention of the grant of the patent: **28.07.2010**
(21) Application number: 07722616.5
(22) Date of filing: 22.05.2007
(51) Int. Cl.: B23B 45/14, B25H 1/00, F16L 41/06

(54) **Boring system for items with various geometries**
Bohrsystem für Artikel mit unterschiedlichen Geometrien
Système de perçage pour articles de formes géométriques variées

(30) Priority: 22.05.2006 DK 200600701
(43) Date of publication of application: 11.02.2009
(73) Proprietor: Vilhelmsen, Mogens, 8600 Silkeborg (DK)
(72) Inventor: OLESEN, Finn, DK-9220 Aalborg Ø (DK); JENSEN, Hans Christian, DK-9541 Suldrup (DK)
(74) Representative: Nielsen, Kim Garsdal
(86) International application number: PCT/DK2007/000238
(87) International publication number: WO 2007/134604

(56) References cited:
- FR-A3- 2 793 175
- GB-A- 2 102 313
- US-A- 2 849 900
- US-A- 4 105 358

## Description

### Field of the Invention

The present invention concerns a boring system, preferably for circular, elliptic or plane items, as per the preamble of claim 1 and a method for establishing a hole in a pipe as per the preamble of claim 9.

### Background of the Invention

Establishing holes in pipes is required in many connections. In connection with pipes for conducting liquids, holes for branch pipes or other kinds of pipe connections are often made. In connection with sewage work it is often necessary to make a hole in the pipe structures used. The holes are often established by using a round boring casing with saw-toothed teeth rolled in wide band steel with saw-toothed teeth in the entire periphery and subsequent welded and applied a loose adapter and a core drill which is slightly longer than the boring casing itself.

There is usually used a boring unit, e.g. in the form of a drill machine without any kind of securing, and often no calibration of the used equipment is performed.

When possible, the boring unit is fastened to the item in which a hole is to be provided. The fastening can be established by using expansion bolts (in case of large material thickness), vacuum plates or a chain which passed all the way around the item. In cases where the applied equipment requires fastening of the item, the boring unit is coupled to a toothed boring stand in which the boring unit can be moved towards the item by means of a handle.

US 3,293,952 discloses a boring apparatus for pipes. The apparatus has no spring action to ensure that the drive unit returns automatically to the start position. The apparatus may only be used for vertical boring. The apparatus is limited to a narrow range of pipe dimensions and may not be used for soft materials, as fastening to soft pipes will cause deformation of the pipe. The apparatus will thus not be used to bore holes in e.g. plastic pipes.

US 4,105,358 describes an apparatus and a method for drilling in pipes as per the preambles of claims 1 and 9. The apparatus requires various sizes of the holding parts for pipes with various diameters. The pipe is to be exposed in order to use the apparatus. The apparatus may only be used for vertical boring.

WO 03/011534 discloses a boring apparatus for pipes. The apparatus may not be used for horizontal boring. There is used a chain for fastening the apparatus, but the tensioning means of the chain cannot stand the action from the pressure of the boring stand against the pipe. The apparatus will thus be displaced in direction away from the pipe. The drive unit is mounted in a holder that requires separate adjustment in relation to the centre line.

By using the prior art, where hand-held boring machines are used, a perpendicular boring against the centre line in a cylindrical element is not ensured. Large hand-held machines where liquid is supplied to the boring casing, are often difficult to handle, as they slide and are loosened in the setup. Thereby, the specified torque cannot be applied. By using such drive units, a hole appears which is inadvertently larger and untrue. This often means that the contact faces in the walls of the bored hole do not form the full sealing face, giving rise to leaks. Besides, the hole is very rarely bored perpendicularly to the surface of the item and/or the centre line.

In light weight materials, the boring casing will often jam in the item due to the design of the cutter element, especially if the boring casing is not calibrated with the adapter used for tensioning in the drive unit. This implies that there is to be performed a further boring in the boring groove, whereby burr formation and irregularities readily arise in the material. Therefore, it has become a known solution to rotate the bore crown opposite the flute in order to reduce the resistance. In connection with establishing holes in cylindrical items, the hole may rarely be provided perpendicularly to the surface of the item and/or centre axis, since the operator cannot fix the boring direction, not even in connection with using a centering drill.

Lightweight pipes, which e.g. can be made of plastic materials, are used to a wide extent. By fastening the boring unit to a lightweight pipe in which there is to be established a hole with the prior art methods, fastening of boring units will deform the pipe. By using the prior art methods for fastening boring units, a bored hole will loose its shape when the fastening is removed. The prior art systems for fastening boring units may therefore not be used in connection with establishing holes in deformable pipes as plastic pipes. Holes in deformable pipes are therefore only made by using handheld boring units. This is very often associated with untrue boring. Besides, the entire boring device can be stopped abruptly during rotation, so that it may be torn out of the hands of the operator which can be injured hereby. The bored hole will often be inadvertently oval. Pipes with small diameter are curving more than pipes with larger diameter. It will thus be very difficult to avoid untrue boring in connection with boring in pipes with small diameter.

### Object of the Invention

The object of the present invention is to provide a boring system for establishing a hole in items with thin as well as thick walls, including pipes and plane surfaces where the boring will not give rise to deformation in the item. It is furthermore the object of the present invention to provide a boring system which may be applied for establishing a hole extending in a desired angle in relation to a pipe wall where untrue boring is avoided. It is fiuthermore the object of the present invention to provide a boring system with which it is possible to perform boring in horizontal direction. Besides, it is an object of the present invention to provide a boring system which may be used both for pipes with small and large diameter, whereby a controlled tolerance and calibration of the entire working process can be attained in the item in which the hole making is performed.

It is furthermore an object to enable adapting the torque of the drive unit to the diameter of the boring casing.

### Description of the Invention

According to the invention, this is achieved with a boring system of the kind mentioned in the introduction, which is peculiar in that the arms are longitudinally adjustable, and with a method for establishing a hole in a pipe with the features of claim 9.

Then the gripping jaw will always be provided under the centre line on the pipe, causing a securing by vertical action, and which therefore is also self-supporting. Hereby is provided the possibility of adapting the fastening device to various pipe dimensions, so that the boring system is fastened optimally to the pipe. It is also possible to change the arms. Hereby it becomes possible to use the boring system for pipes within a very wide range of dimensions. Adjusting the length of the arms can be provided by using arm sections made up of pipes which may slide within each other. Fastening of arm sections in relation to each other can be provided by using the various types of locking mechanisms.

By a system according to the invention, a number of advantages are attained. There is achieved a boring system for establishing a hole in items with thin as well as thick walls, including pipes and plane surfaces, where the boring will not give rise to deformation in the item. Thus it becomes possible to establish exact holes with calibrated setup in soft materials, as e.g. plastic pipes, to which a turned boring casing with a number of applied curving sawtooth segments are used.

Thus it becomes possible also to bore horizontally. Furthermore, it becomes possible to use the boring system for establishing holes in pipes with small as well as large diameters. In connection with boring in pipes, it thus becomes possible to bore precisely in a direction against the centre line of the pipe and to determine desired tolerances. Hereby it becomes possible to provide a watertight connection between a pipe and a connecting element (e.g. a pipe), possibly using a sealing element

The peculiar disposition of interspaces between the sawtooth tips of the bore crown requires use of the fastening device as described, as only few tips will be engaged at the same time.

The boring system includes one or more fastening devices that include a number of mutually rotatably suspended arms, the arms including holding means for fixing the arms in relation to an item, the arms including displacement means for providing movement of the arms and thereby change of the angle between the arms. Hereby is provided possibility of securing the boring system to items such as pipes. The boring system hereby becomes self-supporting in all setups, including also setups for horizontal borings. It will be advantageous to provide the feet of the fastening device with anti-skid coating at the side coming into contact with the item, in order to prevent skidding of parts that are in contact with pipes covered with anti-skid coating. Using the fastening device will ensure that the contact members will be in contact with the item, hereby ensuring boring at the desired angle in relation to the item. Furthermore, the use of the mentioned fastening devices will distribute the pressure from the drive unit (e.g. a drill) so that the item is not deformed. Hereby it becomes possible to establish precise holes in large plastic pipes. By this embodiment, it is furthermore possible to bore holes in underground pipelines without a preceding complete exposure of the pipeline.

According to a possible embodiment, the present invention is peculiar in that the displacement means are cylindrical and include one or more spring means for transmitting mechanical force from the drive unit to the item via the holding element. Hereby is achieved that the force used for pressing the drive unit (e.g. a drilling machine) via the spring elements to the item, so that the boring system is secured to the item during the boring. It is possible to equip the contact members with an anti-skid coating on the side that will be in contact with the item. The boring system is hereby safeguarded against skidding.

According to a second embodiment, the present invention is peculiar in that cross members are provided between the contact members and upon which cross members displacement means are fastened, the cross members being displaceably attached to the contact members, so that the boring direction of the boring element can be varied relative to the contact members. Hereby is achieved a very stable and dimensionally stable system that enables unencumbered moving of the drive unit in against the item. The system ensures that the boring direction of the boring member can be varied relative to the contact members. This is advantageous and provides possibility of establishing many different types of holes, including boring directions that form 45° in relation to the surface of an item.

According to yet an embodiment, the present invention is peculiar in that the boring system includes a holder for securing items. Hereby is achieved the possibility of using the boring system for boring holes in pipes with very small diameter. It will be advantageous as the same boring system may thus be used for boring holes in small as well as large pipes. The boring system may be used for boring holes in pipes with a diameter down to 20 mm.

According to yet an embodiment, the present invention is peculiar in that a gripping jaw can be fastened rotatably to the fastening devices so that rotation of the gripping jaw towards the holding element will move the holding element against the item, whereby the holding element is pressed against the item. Hereby is achieved possibility of providing the required force on the transverse holder which is needed in connection with boring in hard materials. Hereby it becomes easier to establish holes in hard materials as e.g. concrete.

According to yet an embodiment, the present invention is peculiar in that the displacement means for providing displacement of the arms and thereby changing the angle between the arms include an electric or gas-driven actuator. Hereby is achieved the possibility of substituting manual tensioning of the fastening devices with a tensioning provided via the use of an actuator. This may ensure a better tensioning of the fastening devices and thus a more secure fastening of the boring system.

It is to be underlined that the boring system according to the present invention can be used for pipes as well as plane surfaces. It is possible to dimension the parts of the system with the intention of achieving optimal adaptation to specific dimensions. There is even the possibility of using exchangeable parts, e.g. arms and cross members, in order to adapt the boring system to specific purposes.

It is possible to use an insert for the hole in the transverse holder. Hereby it becomes possible to use different drive units. It may e.g. be possible to use battery powered boring machines or boring units which are powered pneumatically or by gas, petrol or other kinds of energy. Using a transverse holder with a hole in which there may be fitted an insert, enables the use of boring units of various sizes, where the inserted drive unit will always be disposed in the centre line.

It is to be noted that in connection with establishing holes in plastic materials, allowance is to be made for the rotational speed of the drive unit in order to avoid too great friction induced heating of the plastic material. The rotational speed of the drive unit is to be adapted to the dimension and structure of the drill and the density of teeth and the disposition of these at the circumference of the boring casing. Too high temperatures should be avoided, as this will cause melting of the plastic material, whereby the nature of the hole can be changed in an unintended way. This is relieved by a number of applied short cutting blades shaped to correspond with the curvature of the casing, thereby achieving free-cut, particularly when drilling in synthetic material like thick PEH/PP.

### Description of the Drawing

The invention will in the following be explained more closely with reference to the accompanying drawing, wherein:
- Fig. 1: shows a boring system mounted on a plastic pipe;
- Fig. 2: shows a part of a boring system corresponding to the one shown in Fig. 1 without fastening device;
- Fig. 3: shows a fastening device;
- Fig. 4: shows a part of a boring system corresponding to the one shown in Fig. 1 with a pipe fixed in a pipe holder;
- Fig. 5: shows a gripping jaw;
- Fig. 6: shows a boring system with a gripping jaw;
- Fig. 7: shows an alternative embodiment of Fig. 1.

### Detailed Description of the Invention

Firstly, it is to be noted that the attached drawing only illustrates non-limiting embodiments of the invention. Other embodiments will be possible within the scope of the present invention as defined by the claims.

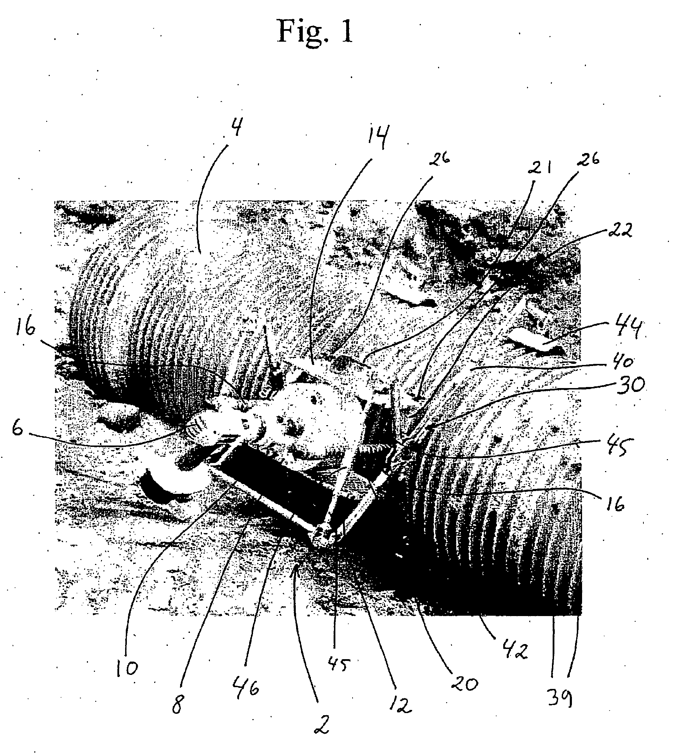

Fig. 1 shows a boring system 2 mounted on plastic pipes 4. The boring system 2 is mounted with the aim of establishing a circular hole via horizontal boring. The boring system 2 includes a boring machine 6 which is fastened to a transverse holder 10. In the transverse holder 10 there is provided a circular hole in which the head of the drill machine is passed through. At each end, the transverse holder 10 is displaceably fastened to a slide rod 16 perpendicularly to the longitudinal axes of the transverse holder 10 and the pipe 4, the rod 16 surrounded by a helical spring 20. Each slide rod 16 is centred on and fastened to a cross member 22 extending perpendicularly to slide rod 16. Each cross member 22 is secured with finger screws 26 at each end and fastened to a rectangular side frame 12, 14 with lattice structure. The fastening of the cross members 22 to the side frames 12, 14 may be established at different distances to the pipe 4, as the finger screws 26 can be displaced along slits (not shown) in the side frames 12, 14. In one side frame 14, a handle 21 is provided. A hole drill 8 is fastened to the drill machine 6.

A fitting (not shown) is fastened on each cross member 22, on which fitting is mounted a scissor-shaped fastening device 30. The fastening device 30 includes longitudinally adjustable arms 40, 42 which are rotatably fastened to each other. At one end of each arm 40, 42 there is fastened a foot 44 serving to secure the boring system 2 to the pipe 4. At the other end of each arm 40, 42 there are fastened two threaded rods 45 which are interconnected with a threaded pipe 46. Each threaded rod 45 and each end of the threaded pipe 46 are equipped with different direction of threading, so that rotation of the threaded pipe 46 causes both threaded rods 45 to move towards or away from the threaded pipe, respectively.

During use, the boring machine 6 and thereby the rotating hole drill 8 are moved towards the pipe 4. The transverse holder 10 is hereby moved down against the pipe 4, whereby the springs 20 are compressed, thus pressing the cross members 22 down against the pipe 4. Hereby, the side frames 12, 14 are pressed against the outer side of the pipe. By rotating the threaded pipe 46, the feet 44 are moved against each other. The feet 44 thus come into contact with the pipe 4 under the centre line, whereby the boring system 2 is secured to the pipe 4. In connection with boring of holes without using the fastening device 30, the boring system 2 may be secured in contact with the pipe 4 by using the handle 26. The feet 44 may advantageously be designed so that they may hold several ribs 39 of the pipe simultaneously, even though the ribs may have different height and be separated by various spacings. The feet 44 can be replaceable and may advantageously be adapted to the curvature of the pipe.

It is possible to dispose one cross member 22 at greater distance from the pipe 4 than the other cross member 22. Hereby it becomes possible to change the direction of boring, while at the same time a precise boring is achieved. The boring system 2 may advantageously include means (not shown) for adjusting the distance between the side frames 12, 14. Hereby it becomes possible to use the boring system 2 for pipes 4 within a very wide range of dimensions. It is advantageous to use a boring system 2 which is largely symmetrical with regard to ensuring the greatest possible precision of drilling, as asymmetry may give rise to distortion of the system.

It is possible to use replaceable springs so that the boring system can be adapted to the nature of the item and the action of force from the drive unit, including the weight of the drive unit. When using large and/or heavy drive units, there may advantageously be used strong springs in order to press the drive unit back from a bored hole.

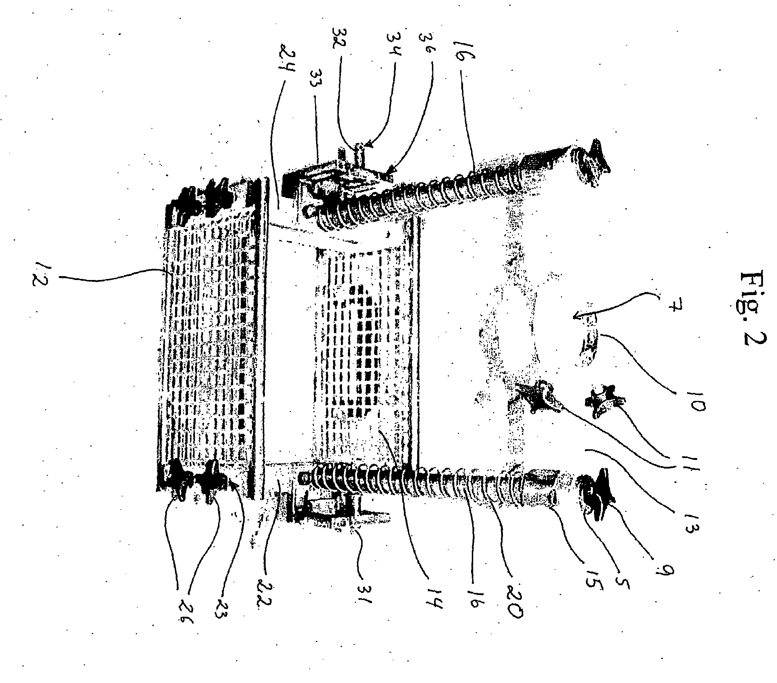

Fig. 2 shows a part of a boring system 2 corresponding to the one shown in Fig. 1. The fastening device 30 shown in Fig. 1, the drill machine 6 and the pipe 4 are not shown in Fig. 2. Fig. 1 shows a transverse holder 10 with a circular hole 7. In the transverse holder 10 there is mounted two finger screws 11 for clamping a drill machine (not shown). The transverse holder 10 includes a rod 13 at each end, ending in a cylindrical slide bushing 15 mounted externally of a slide rod 16 with circular cross-section. A helical spring 20 is provided around each slide rod 16. In the shown embodiment, each slide bushing is upwards limited by a stop washer 5 fastened to the top of the slide rod 16 with a finger screw 9. Each slide rod 16 is fastened to a cross member 22, 24 consisting of two elongated rods extending in parallel and with rectangular basic shape, where the slide rods 16 are fastened to the centre of the upper of these rods, upon which is furthermore fastened an angle brace 36. Each angle brace 36 includes a rectangular plate 33 in which is provided a hole in which is passed a split-pin 31, 32 with a hole 34. The cross members 22, 24 are fastened to a rectangular side frame 12, 14 at each end. The cross members 22, 24 can be fastened to the side frames 12, 14 at different distances to the pipe 4 by displacing the finger screws 26 along slits 23 in the side frames 12, 14. The angle braces 36 are used for mounting the fastening device 30 shown in Fig. 1. Using the cylindrical slide bushings 15 ensures easy movement of the transverse holder 10, at there is very limited friction between the cylindrical slide bushings 15 and the slide rods 16.

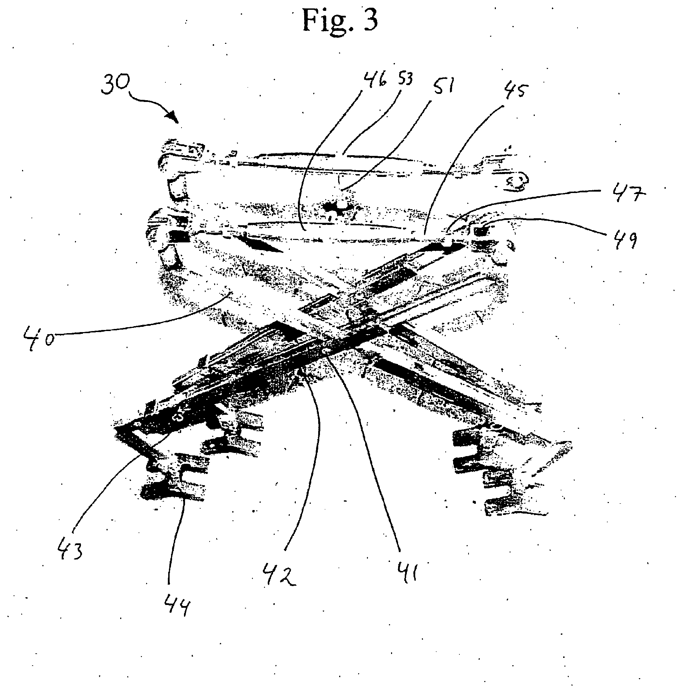

Fig. 3 shows a close-up view of the fastening device 30 shown in Fig. 1. The fastening device 30 consists of two identical parts, each including two arms 40, 42, in which is provided a hole 41. At one end of each arm 40, 42 there is fastened a foot 44 via a split-pin 43. Each foot 44 is passed into the arm 40, 42 which is hollow in the area where the foot 44 is mounted. The arms 40, 42 hereby become longitudinally adjustable. The arms 40, 42 are fastened to each other in pairs via the two threaded rods 45 which are interconnected with a threaded rod 46. At the centre of the threaded pipe 46, a hole is provided through which a threaded rod 51 with nuts at the ends is passed. The threaded rods 45 are fastened to a U-shaped flat iron fitting 49 that constitutes a hinge fitted on the arms 40, 42. Through the holes 41, the 31, 32 shown in Fig. 2 are passed. The fastening device 30 hereby becomes rotatably fastened to the fittings 36 shown in Fig. 2. An actuator may be used as an alternative to the applied threaded pipes 46 or threaded rods 45. An electric or gas-powered actuator may e.g. be used. It is possible to change and adapt the used arms 40, 42 to pipe dimensions (diameter) over a very wide range.

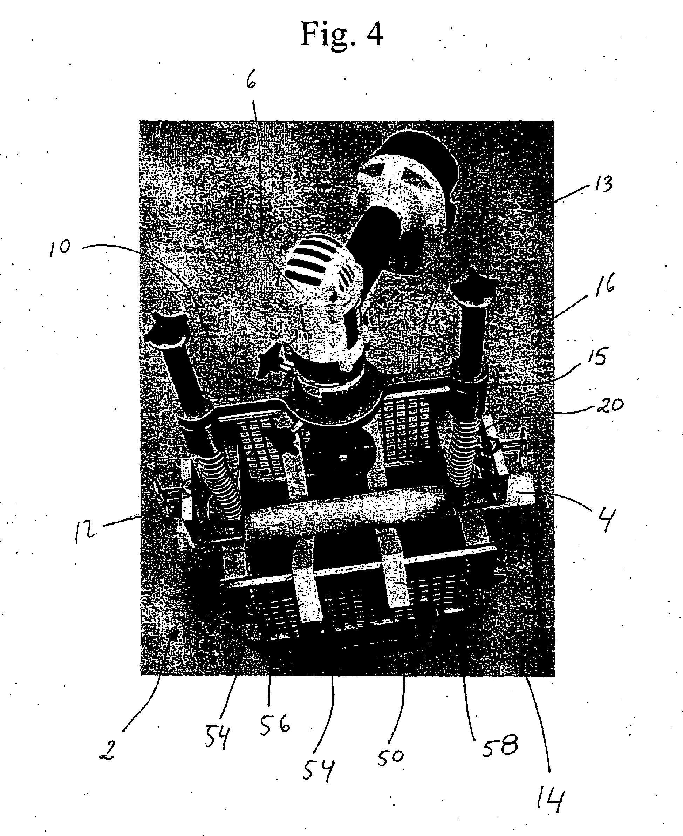

Fig. 4 illustrates a part of a boring system 2 including a holder 50 in which a pipe 4 is fixed. The remaining parts of the boring system are described in the description of the drawing with reference to Figs. 1 - 3. The boring system 2 rests on a plane base and includes a drill machine 6 fastened to a transverse holder 10 with cylindrical slide bushings 15 at each side. The transverse holder 10 is displaced some way down along two slide rods 16, whereby the helical spring 20 provided around the slide rods 16 is compressed. The holder 50 consists of two elongated plates 56, 58 with rectangular cross-section and extending in parallel. The elongated plates 56, 58 each forms a characteristic M-shape with top points 54 at the edge of the side frames facing away from the contact face against the base. The pipe 4 is supported by the central part of the elongated plates 56, 58. The plates 56, 58 are interconnected at each end via end plates 54. Use of the holder 50 enables drilling precise holes in pipes 4 with very small diameter and/or large curvature.

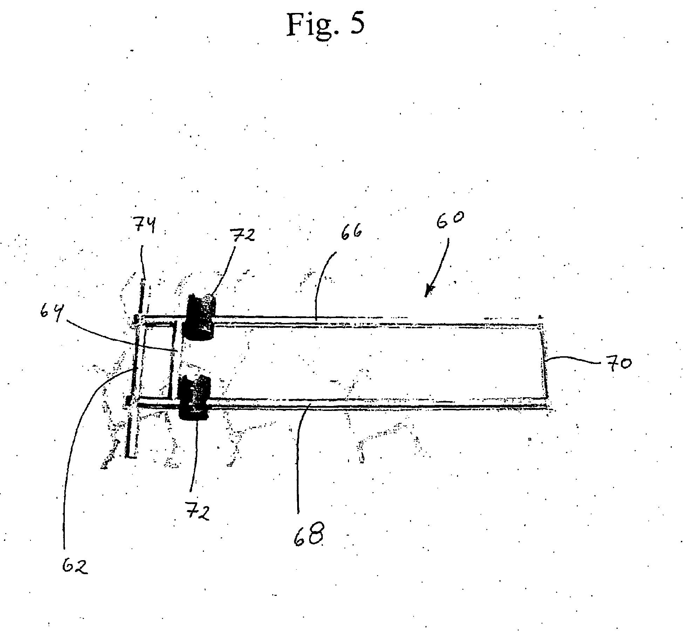

Fig. 5 shows an embodiment of a gripping jaw 60 according to the present invention. The gripping jaw 60 includes two longitudinal, parallel and cylindrical rods 66, 68, which at one end are fastened to a handle bar 70 serving as a handle. At the other end, the longitudinal rods 66, 68 are interconnected by a swivel rod 74 medially of which a support rod 64 is provided. Two support studs 72 are provided. Through holes in the support studs 72, the support studs 72 are passed through the two longitudinal rods 66, 68.

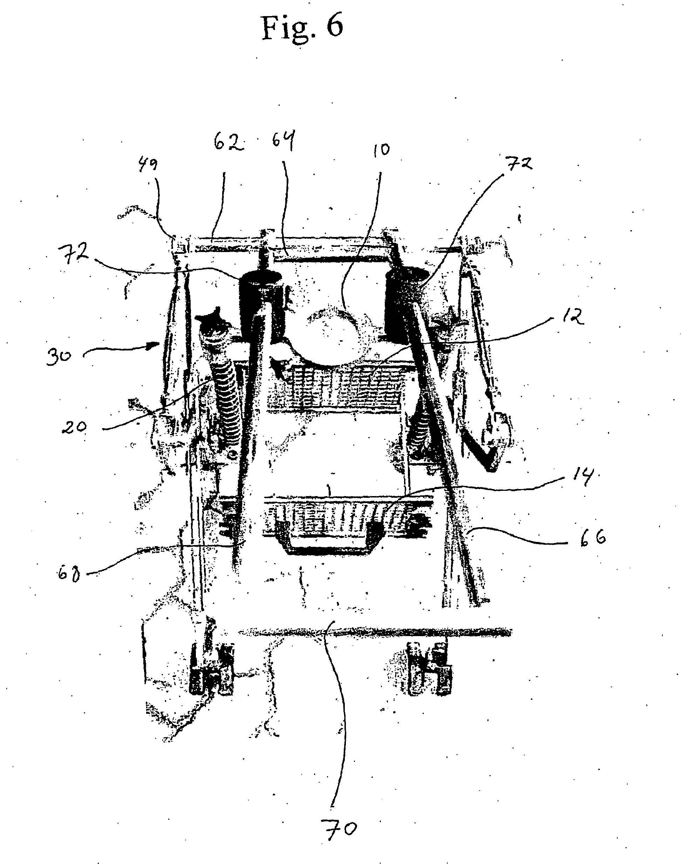

Fig. 6 shows a boring system 2 corresponding to the one shown in Fig. 1. The boring system 2 includes a gripping jaw 60 consisting of two longitudinal, parallel and cylindrical rods 66, 68. The longitudinal rods 66, 68 are fastened to a handle bar 70 at one end and fastened to a swivel rod 74 which is rotatably fastened to the U-shaped flat iron fittings 49 on the fastening device 30 (which is also illustrated on Figs. 1 and 3). There is provided a support rod 64 between the handle bar 70 and the rotational rod 74 close to the latter. Between the support rod 64 and the handle bar 70 there are provided two support studs 72. The longitudinal rods 66, 68 are passed through holes in the support studs 72. On Fig. 6 the support studs 72 are resting on the transverse holder 10. During use, the handle bar 70 is pressed down against the item (not shown) in which a hole is to be established. The support studs 72 will hereby move the transverse holder against the item (not shown), whereby the springs 20 and the side frames 12, 14 are pressed against the outer side of the item.

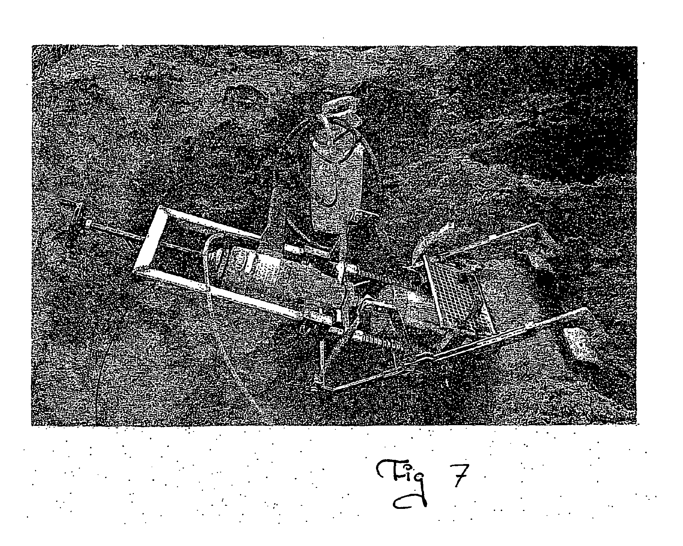

Fig. 7 shows an embodiment of a boring system according to the present invention. The boring system includes a drill member mounted on a drill machine which may be displaced in radial direction against a pipe with circular cross-section. The drill machine is fastened to a transverse holder which is displaceably fastened to two slide rods with each their helical spring. Farthest from the pipe, stop washers are provided in the slide rods by means of finger screws. The slide rods are fastened to each their contact member. The contact members are bearing on the pipe and connected with a support rod. During use, the drill machine is moved in radial direction against the pipe. As the contact members are abutting on the pipe and are oriented in parallel with the radial direction, the displacement of the drill machine will move the transverse holder and the drill member in radial direction against the pipe. Hereby may be established a hole which is directed precisely and right in against the centre line of the pipe. The spaced apart saw tips on drill casing provide free-cut and thereby less heat action on the plastic material, particularly by great material thickness in PEH material.

## Claims

1. A boring system (2), preferably for circular, elliptic or plane items (4), the boring system (2) Including a drive unit (6) with a boring member (8), where the drive unit (6) is secured In a holding element (10) which may be displaced radially in against and away from the item (4), respectively, the boring system (2) furthermore Including contact members (12, 14), which during use of the boring system (2) are bearing on the item (4), the contact members (12, 14) being provided in such a way and with such mutual spacing that will enable moving the boring member (8) radially in against the item (4) via an area delimited by the contact members (12, 14) while the contact members (12, 14) at the same time are In contact with the item (4), and where the holding element (10) is displaceably mounted on one or more displacement means (16), on which displacement means (16) the holding element (10) can be displaced radially in against and away from the item (4), respectively, the boring system (2) further including one or more fastening devices (30) that include a number of mutually rotatably suspended arms (40, 42), the arms (40, 42) Including holding means (44) for fixing the arms (40, 42) In relation to an item (4), the arms (40, 42) including displacement means (46) for providing displacement of the arms (40, 42) and thereby change of the angle between the arms (40, 42), **characterized in that** the arms (40, 42) are longitudinally adjustable.

2. Boring system (2) according to claim 1, **characterised in that** the displacement means (16) are cylindrical and Include one or more spring means (20) for transmitting mechanical force from the drive unit (6) to the item (4) via the holding element (10).

3. Boring system (2) according to claim 1 or 2, **characterized in that** cross members (22, 24) are provided between the contact members (12, 14) and upon which cross members (22, 24) displacement means (16) are fastened, the cross members (22, 24) being displaceably attached to the contact members (12, 14), so that the boring direction of the boring element (8) can be varied relative to the contact members (12**,** 14).

4. Boring system (2) according to any of caims 1 - 3, **characterized in that** the boring system (2) includes a holder (50) for holding items (4).

5. Boring system (2) according to claim 1 - 4, **characterized in that** a gripping jaw (60) can be fastened rotatably to the fastening devices (30) so that rotation of the gripping jaw (60) toward the holding element (10) will move the holding element (10) against the item (4), whereby the holding element (10) is pressed against the item (4).

6. Boring system (2) according to claim 1 - 5, **characterized in that** the displacement means (46) for providing displacement of the arms (40, 42) and thereby changing the angle between the arms (40, 42) include an electric or gas-driven actuator.

7. Boring system (2) according to any one of the preceding claims wherein a foot (44) is fastened at one end of each arm (40, 42).

8. Boring system (2) according to claim 7, **characterized in that** the foot is provided with an anti-skid coating.

9. Method for establishing a hole in a pipe **characterized in** the steps of
providing a boring system according to any one of the preceding claims, having feet (44),
adapting the arms (40, 42) to the pipe dimensions,
securing the boring system (2) to the pipe by moving the feet (44) against each other so as to come in contact with the pipe under the centre line,
displacing the boring member (8) together with the drive unit (6) in radial direction (80) towards an item (4), where the drive unit (6) interacts with at least two contact members (12, 14) that are bearing on the item,
the contact members (12, 14) thereby determining a radial direction (80) for the boring member (8) and the boring member (8) interacting with displacement means (16) to ensure a radial movement of the boring member (8).

## Patentansprüche

1. Bohrsystem (2), vorzugsweise für kreisförmige, elliptische oder ebene Gegenstände (4), wobei das Bohrsystem (2) eine Antriebseinheit (6) mit einem Bohrelement (8) enthält und die Antriebseinheit (6) in einem Halteelement (10) befestigt ist, das radial auf den Gegenstand (4) zu bzw. von diesem weg verschoben werden kann, wobei das Bohrsystem (2) weiterhin Kontaktelemente (12, 14) enthält, die während der Benutzung des Bohrsystems (2) auf dem Gegenstand (4) ruhen, und die Kontaktelemente (12, 14) derart und mit einem derartigen gegenseitigen Abstand vorgesehen sind, dass ein Bewegen des Bohrelementes (8) radial auf den Gegenstand (4) zu über einen Bereich möglich ist, der durch die Kontaktelemente (12, 14) begrenzt ist, während die Kontaktelemente (12, 14) zur selben Zeit mit dem Gegenstand (4) in Kontakt stehen, und das Halteelement (10) verschiebbar an wenigstens einer Verschiebeeinrichtung (16) angebracht ist, wobei an dieser Verschiebeeinrichtung (16) das Halteelement (10) radial auf den Gegenstand (4) zu bzw. von diesem weg verschoben werden kann, wobei das Bohrsystem (2) weiterhin wenigstens eine Befestigungsvorrichtung (30) enthält, die eine Anzahl von zueinander drehbar gelagerter Arme (40, 42) enthält, wobei die Arme (40, 42) Halteeinrichtungen (44) zum Fixieren der Arme (40, 42) im Bezug auf einen Gegenstand (4) enthalten und die Arme (40, 42) Verschiebeeinrichtungen (46) enthalten, die eine Verschiebung der Arme (40, 42) ermöglichen und **dadurch** den Winkel zwischen den Armen (40, 42) verändern, **dadurch gekennzeichnet, dass** die Arme (40, 42) in Längsrichtung einstellbar sind.

2. Bohrsystem (2) nach Anspruch 1, **dadurch gekennzeichnet das** die Verschiebeeinrichtungen (16) zylindrisch sind und wenigstens eine Federeinrichtung (20) enthalten, die eine mechanische Kraft von der Antriebseinheit (6) auf den Gegenstand (4) über das Halteelement (10) überträgt.

3. Bohrsystem (2) nach Anspruch 1 oder 2, **dadurch gekennzeichnet, dass** Strebeelemente (22, 24) zwischen den Kontaktelementen (12, 14) vorgesehen sind und auf diesen Strebeelementen (22, 24) Verschiebeeinrichtungen (16) befestigt sind, wobei die Strebeelemente (22, 24) verschiebbar an den Kontaktelementen (12, 14) angebracht sind, so dass die Bohrrichtung des Bohrelementes (8) relativ zu den Kontaktelementen (12, 14) geändert werden kann.

4. Bohrsystem (2) nach einem der Ansprüche 1 bis 3, **dadurch gekennzeichnet, dass** das Bohrsystem (2) einen Halter (50) zum Halten von Gegenständen (4) enthält.

5. Bohrsystem (2) nach Anspruch 1 bis 4, **dadurch gekennzeichnet, dass** eine Greifklemmbacke (60) derart drehbar an den Befestigungsvorrichtungen (30) angebracht werden kann, dass die Drehung der Greifklemmbacke (60) hin zum Halteelement (10) das Halteelement (10) auf den Gegenstand (4) zu bewegt, wodurch das Halteelement (10) gegen den Gegenstand (4) gedrückt wird.

6. Bohrsystem (2) nach Anspruch 1 bis 5, **dadurch gekennzeichnet, dass** die Verschiebeeinrichtungen (46), die für die Verschiebung der Arme (40, 42) sorgen und **dadurch** den Winkel zwischen den Armen (40, 42) ändern, einen elektrisch oder durch Gas angetriebenen Stellantrieb enthalten.

7. Bohrsystem (2) nach einem der vorhergehenden Ansprüche, bei dem ein Fuß (44) an einem Ende jedes Armes (40, 42) befestigt ist.

8. Bohrsystem (2) nach Anspruch 7, **dadurch gekennzeichnet, dass** der Fuß mit einer Antirutschbeschichtung versehen ist.

9. Verfahren zum Erstellen eines Loches in einem Rohr, **gekennzeichnet durch** folgende Schritte:
Bereitstellen eines Bohrsystems nach einem der vorhergehenden Ansprüche, das Füße (44) hat,
Anpassen der Arme (40, 42) an die Rohrabmessungen,
Sichern des Bohrsystems (2) an dem Rohr **durch** Bewegen der Füße (44) zueinander, um so mit dem Rohr unter der Mittellinie in Kontakt zu gelangen, und
Verschieben des Bohrelementes (8) zusammen mit der Antriebseinheit (6) in radialer Richtung (80) auf einen Gegenstand (4) zu, wobei die Antriebseinheit (6) mit wenigstens zwei Kontaktelementen (12, 14) zusammenwirkt, die auf dem Gegenstand ruhen,
wobei die Kontaktelemente (12, 14) **dadurch** eine radiale Richtung (80) für das Bohrelement (8) festlegen und das Bohrelement (8) mit den Verschiebeeinirichtungen (16) zusammenwirkt, um eine radiale Bewegung des Bohrelementes (8) sicherzustellen.

## Revendications

1. Système d'alésage (2), de préférence pour des articles circulaires, elliptiques ou plans (4), le système d'alésage (2) comprenant une unité d'entraînement (6) avec un élément d'alésage (8), dans lequel l'unité d'entraînement (6) est fixée dans un élément de support (10) qui peut être déplacé radialement contre et à distance de l'article (4), respectivement, le système d'alésage (2) comprenant en outre des éléments de contact (12, 14) qui, pendant l'utilisation du système d'alésage (2) s'appuient sur l'article (4), les éléments de contact (12, 14) étant prévus de telle sorte et avec un espacement mutuel tel qu'ils permettent de déplacer l'élément d'alésage (8) radialement contre l'article (4) via une zone délimitée par les éléments de contact (12, 14) alors que les éléments de contact (12, 14) sont en même temps en contact avec l'article (4) et dans lequel l'élément de support (10) est monté de manière déplaçable sur un ou plusieurs moyens de déplacement (16), sur lesquels moyens de déplacement (16), l'élément de support (10) peut être déplacé radialement contre et à distance de l'article (4) respectivement, le système d'alésage (2) comprenant en outre un ou plusieurs dispositifs de fixation (30) qui comprennent un certain nombre de bras suspendus mutuellement de manière rotative (40, 42), les bras (40, 42) comprenant des moyens de support (44) pour fixer les bras (40, 42) par rapport à un article (4), les bras (40, 42) comprenant des moyens de déplacement (46) pour fournir le déplacement des bras (40, 42) et changer ainsi l'angle entre les bras (40, 42), **caractérisé en ce que** les bras (40, 42) sont ajustables de manière longitudinale.

2. Système d'alésage (2) selon la revendication 1, **caractérisé en ce que** les moyens de déplacement (16) sont cylindriques et comprennent un ou plusieurs moyens de ressort (20) pour transmettre la force mécanique de l'unité d'entraînement (6) à l'article (4) via l'élément de support (10).

3. Système d'alésage (2) selon la revendication 1 ou 2, **caractérisé en ce que** l'on prévoit des traverses (22, 24) entre les éléments de contact (12, 14) et sur lesquelles traverses (22, 24), on fixe des moyens de déplacement (16), les traverses (22, 24) étant fixées de manière déplaçable sur les éléments de contact (12, 14), de sorte que la direction d'alésage de l'élément d'alésage (8) peut être modifiée par rapport aux éléments de contact (12, 14).

4. Système d'alésage (2) selon l'une quelconque des revendications 1 à 3, **caractérisé en ce que** le système d'alésage (2) comprend un support (50) pour supporter des articles (4).

5. Système d'alésage (2) selon les revendications 1 à 4, **caractérisé en ce qu'**une mâchoire de préhension (60) peut être fixée de manière rotative sur les dispositifs de fixation (30) de sorte que la rotation de la mâchoire de préhension (60) vers l'élément de support (10) déplace l'élément de support (10) contre l'article (4), moyennant quoi l'élément de support (10) est comprimé contre l'article (4).

6. Système d'alésage (2) selon les revendications 1 à 5, **caractérisé en ce que** les moyens de déplacement (46) pour fournir le déplacement des bras (40, 42) et changer ainsi l'angle entre les bras (40, 42) comprennent un actionneur électrique ou à gaz.

7. Système d'alésage (2) selon l'une quelconque des revendications précédentes, dans lequel un pied (44) est fixé au niveau d'une extrémité de chaque bras (40, 42).

8. Système d'alésage (2) selon la revendication 7, **caractérisé en ce que** le pied est prévu avec un revêtement antiglisse.

9. Procédé pour établir un trou dans un tuyau, **caractérisé par** les étapes consistant à :
prévoir un système d'alésage selon l'une quelconque des revendications précédentes, ayant des pieds (44),
adapter les bras (40, 42) aux dimensions du tuyau,
fixer le système d'alésage (2) sur le tuyau en déplaçant les pieds (44) les uns contre les autres afin de venir en contact avec le tuyau sous l'axe central,
déplacer l'élément d'alésage (8) conjointement à l'unité d'entraînement (6) dans la direction radiale (80) vers un article (4), dans lequel l'unité d'entraînement (6) interagit avec au moins deux éléments de contact (12, 14) qui s'appuient sur l'article,
les éléments de contact (12, 14) déterminant ainsi une direction radiale (80) pour l'élément d'alésage (8) et l'élément d'alésage (8) interagissant avec les moyens de déplacement (16) pour garantir un mouvement radial de l'élément d'alésage (8).
